# EUROPEAN PATENT APPLICATION

(11) **EP 1 748 362 A2**
(43) Date of publication of application: **31.01.2007**
(21) Application number: 06117717.6
(22) Date of filing: 24.07.2006
(51) Int. Cl.: G06F 11/10

(54) **Methods and systems for refresh and error scrubbing of dynamic memory devices**

(30) Priority: 25.07.2005 US 188312
(71) Applicant: Honeywell International Inc., Morristown, New Jersey 07962 (US)
(72) Inventor: Kimmery, Clifford E, Florida, FL 33756 (US)
(74) Representative: Haley, Stephen

(57) **Abstract**

Methods and systems for refresh and error scrubbing of dynamic memory devices is provided. A method for maintaining the integrity of data stored in dynamic memory devices comprises determining a refresh-scrub-access-period time interval for a dynamic memory device having a plurality of memory elements, based on a refresh rate requirement for the dynamic memory device and an error scrub rate requirement; and performing an error-scrub function on each memory element of the dynamic memory device at a periodicity not exceeding the refresh-scrub-access-period time interval.

## Description

The present invention generally relates to digital computers and more specifically to dynamic memory devices.

### BACKGROUND

Memory devices subjected to elevated radiation environments such as in high altitudes and outer space, suffer from single event effect sensitivity where memory cell values can change as a result of being bombarded with radiation particles (i.e. upsets). Traditional solutions to this problem include error scrubbing, where each memory location is periodically read and checked for errors. If an error is found, the correct value is retrieved from a redundant source and written back into the memory location. Additionally, many memory devices, such as dynamic random access memory (DRAM) must be periodically refreshed for proper function. Refreshing and error scrubbing of memory devices each consume memory access time that could otherwise be used for applications that store data in the memory devices. Radiation hardened memory technologies, while less susceptible to single event effects, are typically less dense, requiring more devices to obtain the same storage capacity available from a fewer number of non-hardened devices.

For the reasons stated above and for other reasons stated below which will become apparent to those skilled in the art upon reading and understanding the specification, there is a need in the art for improved methods and systems for refreshing and error scrubbing memory devices.

The Embodiments of the present invention provide methods and systems for refreshing and error scrubbing memory devices and will be understood by reading and studying the following specification.

In one embodiment, a method for implementing a refresh-error-scrubbing function for a memory device is provided. The method comprises sequentially reading data contained in a plurality of memory locations of a memory device, checking for errors in data stored in the plurality of memory locations, and correcting memory location data when an error is found. Every memory location within the plurality of memory locations is repeatedly read with a periodicity not exceeding a refresh-scrub-access-period time interval.

In another embodiment, a system for storing data is provided. The system comprises one or more dynamic memory devices and a memory management module coupled to the one or more memory devices. The memory management module is adapted to periodically perform a refresh-scrub function on the one or more memory devices such that memory locations within the one or more memory devices are error-scrubbed within a time required by a refresh-scrub-access-period time interval.

In still another embodiment, a system for storing data is provided. The system comprises means for storing data wherein the means for storing data stores data values in a plurality of memory elements, means for reading the data values stored in the plurality of memory elements, means for identifying errors in data values stored in the plurality of memory elements, and means for correcting data values when an error is found. The means for reading reads each of the plurality of memory elements with a periodicity not exceeding a refresh-scrub-access-period time interval.

In yet another embodiment, a computer-readable medium having computer-executable program instructions for a method for maintaining the integrity of data stored in dynamic memory devices is provided. The method comprises performing an error-scrubbing function on each memory element of a dynamic memory device having a plurality of memory elements at a periodicity not exceeding a refresh-scrub-access-period time interval.

The present invention can be more easily understood and further advantages and uses thereof more readily apparent, when considered in view of the description of the preferred embodiments and the following figures in which:
Figure 1 is a flow chart illustrating a method of one embodiment of the present invention;
Figure 2 is a flow chart illustrating a method of one embodiment of the present invention;
Figures 3A, 3B and 3C are diagrams illustrating a pattern for refresh-error-scrubbing of one embodiment of the present invention;
Figure 4 is a flow chart illustrating a method of one embodiment of the present invention; and
Figure 5 is a block diagram illustrating a system for storing digital data of one embodiment of the present invention.

In accordance with common practice, the various described features are not drawn to scale but are drawn to emphasize features relevant to the present invention. Reference characters denote like elements throughout figures and text.

In the following detailed description, reference is made to the accompanying drawings that form a part hereof, and in which is shown by way of illustration specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

Embodiments of the present invention increase the availability of memory devices for the use of applications by combining error scrubbing and memory refresh functions into a single activity. Error scrubbing functions must check each memory device location within some minimum interval based on the probability of occurrence of an error. This probability is a function of both memory device characteristics and environmental factors. If an error is found, the correct value is retrieved from a redundant source and written back into the memory location.

An error scrub rate for a memory device is chosen to ensure that upsets are discovered and corrected before the number of cumulative upsets reaches a point where they can no longer be fixed. Typically, for a given device operating in a given environment, a radiation effect analysis is used to determine the probability of an upset occurring and how often an upset can be expected. The error scrub rate is typically chosen such that the entire memory is scrubbed within the probability time period that one upset is expected. The probability time period establishes the element error scrub interval within which error scrubbing a specific element (i.e. a device address) must be repeated. For example, where the probability time period for expecting one upset in a 1600 element device is 1.6 seconds then the error scrub rate for that device is equal to 1600(elements)/1.6(seconds), or 1000 elements per second. The error scrub function must error-scrub at a rate of at least 1000 elements every second to satisfy the 1.6 second element error scrub interval.

Dynamic memory devices, such as DRAM, require refreshing the entire contents of the memory device within some minimum interval to prevent loss of the memory device's content. In one embodiment, the refresh rate for a memory device is determined based on manufacture's specified row refresh interval, which specifies the maximum time interval for repeating the refresh cycle to a specific row. The entire contents of a memory device must be refreshed within the time interval specified by the manufacturer to prevent loss of the memory device's content. For example, where the manufacturer's row refresh interval for a 6400 row memory device is 64 milliseconds, then the refresh rate for that device is equal to 6400(rows)/64(milliseconds), or 100,000 rows per second. A refresh function must perform a refresh at a rate of at least 100,000 rows every second to satisfy the 64 millisecond row refresh interval requirement.

Embodiments of the present invention appropriately match the refresh and error scrubbing intervals, and define memory device access patterns that result in accomplishing both the refresh and error scrubbing functions simultaneously, thus reducing memory access time wasted by these overhead activities.

Embodiments of the present invention take advantage of a characteristic of DRAM that reading from a memory location performs a refresh of the contents of the memory location. As long as memory locations within a memory device are continuously read in a cyclical pattern, a separate refresh operation is not necessary. Normal execution of computer applications cannot be relied upon to perform all the needed memory location reads to refresh an entire memory device because typical computer applications only access memory by reading from, and writing to, specific memory locations as required. Accordingly, access of the memory device by applications results in a mostly random pattern of reads and writes that is insufficient to ensure that every memory location is refreshed with enough frequency to satisfy the refresh rate requirement of the memory device. In contrast, because error scrubbing functions access every memory location while looking for upsets to fix, error scrubbing functions can be relied upon to refresh the memory device. Embodiment of the present invention provide methods for performing error scrubbing memory accesses of sufficient frequency and pattern as to satisfy both the error scrub rate and the refresh rate, eliminate the need to perform separate refresh operations, and thus simultaneously reduce the memory device's overhead time requirements while increasing the time the memory device is available for applications to access.

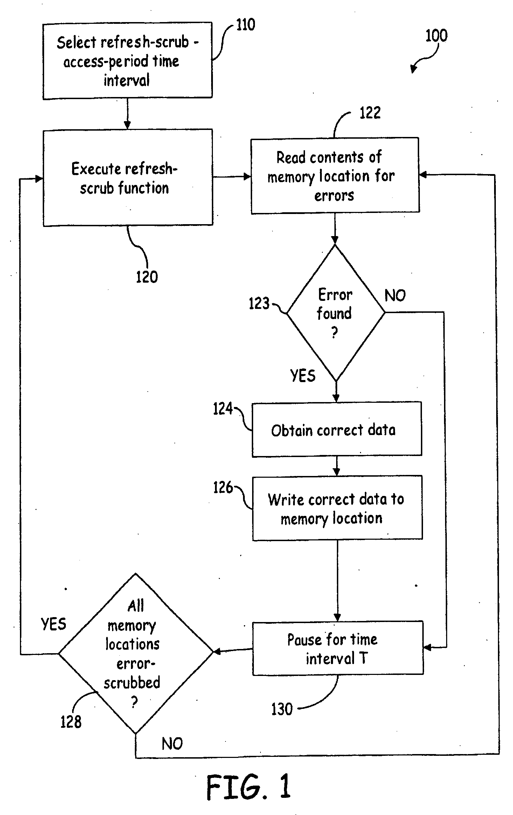

Figure 1 is a flow chart illustrating method 100 for implementing a combined refresh-error-scrubbing function for a memory device of one embodiment of the present invention. Method 100 of Figure 1 takes advantage of the characteristic of dynamic memory that reading data from a memory location also refreshes the memory location. The method first comprises selecting a refresh-scrub-access-period time interval (110). The refresh-scrub-access-period time interval is the time interval within which every memory location within a memory device must be read by the error scrubbing function to ensure that both the refresh rate requirements of the memory device, and the error scrub rate requirements for correcting upsets, are satisfied. In one embodiment, the refresh-scrub-access-period time interval is simply the shorter of the row refresh interval and the element error scrub interval. The method next comprises executing a refresh-error-scrubbing function (120). The refresh-error-scrubbing function cycles through every memory location of the memory device performing error-scrubbing accesses. Method 100 first reads the contents of a memory location (122) to identify errors. Due to the nature of dynamic memory devices, by reading the data contained in a memory location, the memory location is simultaneously refreshed. When an error is found (123), the correct value is retrieved from a redundant source (124) and written back into the memory location (126). The refresh-error-scrubbing function continues to cycle through each memory location until every location is error-scrubbed (128). The method resumes with again executing the refresh-error-scrubbing function (120).

In one embodiment, method 100 pauses for time interval T (130), allowing applications to access the memory device. The pause time interval is chosen to ensure that the refresh-scrub function reads the contents of each memory location (122) within the time required by the refresh-scrub-access-period time interval. In one embodiment, the pause for time interval T (130) is placed between each subsequent error-scrubbing access to distribute the error-scrub accesses evenly throughout the refresh-scrub-access-period time interval. Distributing the delay throughout the interval reduces the access latency for memory access for applications. If the refresh-scrub is performed all at one time, the application access to the memory must be suspended for the duration. Some application may not be able to tolerate that behavior. Alternately, if an application is known to have periods of limited memory access, choosing to perform a refresh-scrub function during those periods is beneficial. The timing and granularity of refresh-scrub actions should be viewed as application-specific, so long as the constraints of the refresh-scrub-access-period are met. Most applications are likely to prefer a fine-grained, distributed behavior that introduces minimum latency for functional access to memory.

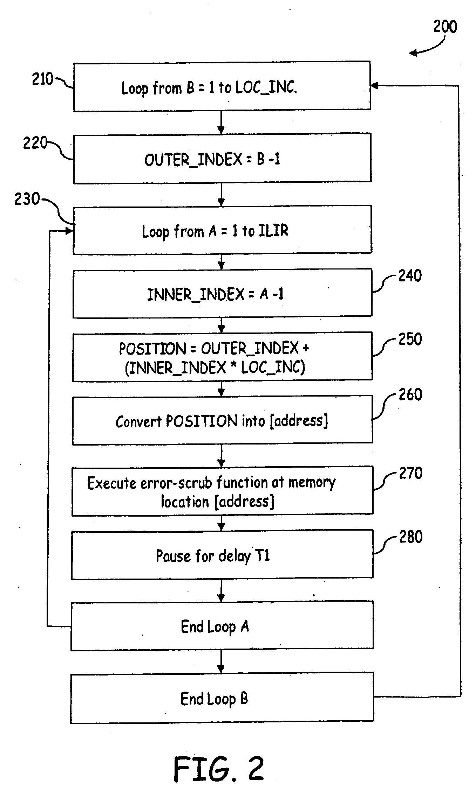

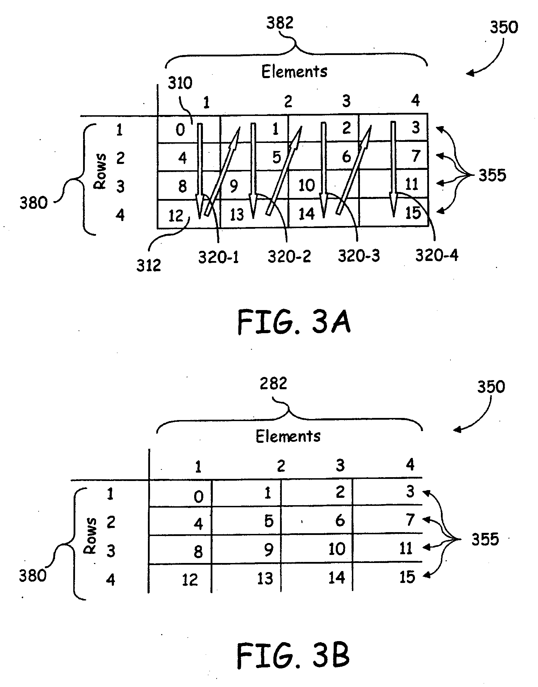

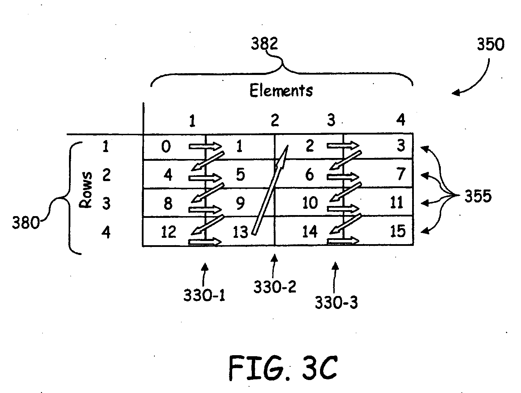

Figure 2 illustrates a method 200 of one embodiment for an algorithm which further takes advantage of a characteristic of dynamic memory devices that reading data from a memory location within a row of memory locations not only refreshes that memory location but also refreshes the entire row. As illustrated in Figure 3A, in one embodiment, memory locations in memory device 350 are organized into a matrix having plurality of rows 380, with each row comprising a plurality of memory location elements 382. (For simplicity, only four rows comprising four elements are illustrated in Figures 3A, 3B and 3C.) Method 200 provides an efficient pattern for performing error-scrub accesses when cycling through memory locations of memory device 350 for satisfying refresh rate requirements and error-scrub rate requirements. Beginning with a first memory location of a first row 310 (i.e. element 1 of row 1), method 200 performs an error-scrub access on that element which simultaneously results in a refresh for every memory location in row 1. Method 200 then proceeds, cycling through the first memory location of the next adjacent rows (illustrated by 320-1) performing error-scrub accesses until completing the first memory location of the final row 312 (e.g. element 1 of row 4). The result of this pattern is that in the time it takes to error-scrub one element in each of the rows, all memory locations in memory device 350 are refreshed. The method then repeats this sequence, cycling through the second element of each row (illustrated by 320-2), and so on through the n'th elements of each row (illustrated by 320-3 and 320-4) until every memory location is error-scrubbed.

The algorithm of method 200 defines three constants: LOC_INC, LOC_RANGE and INNER_LOOP_ITERATION_RANGE (ILIR). LOC_INC is defined as the difference in memory device locations between the first element on one row and the first element of the adjacent row (i.e. the number of memory location elements contained per row). LOC_RANGE is defined as the total number of memory location elements which must be refreshed and error-scrubbed within the refresh-scrub-access-period time interval. INNER_LOOP_ITERATION_RANGE is equal to LOC_RANGE divided by LOC_INC.

The algorithm of 200 comprises a first loop sequence (210) which cycles in one step increments from one to LOC_INC. The variable OUTER_INDEX equals the current value of the first loop sequence minus one (220). Within the first loop sequence, a second loop sequence (230) cycles in one step increments from 1 to ILIR. INNER_INDEX equals the current value of the second loop sequence minus one (240). Within each second loop sequence, the algorithm cycles through the rows of memory device 350 (illustrated by 320-1 to 4) executing an error-scrub access (270) with one memory location within each row. In one embodiment, method 200 further defines a function POSITION (250) as equal to (OUTER_INDEX + (INNER_INDEX * LOC_INC). The POSITION function calculates an integer value correlating the current OUTER_INDEX and INNER_INDEX values to memory location (as illustrated in Figure 3B) which should be error-scrubbed next. POSITION values for each element are illustrated generally at 355. For example, when POSITION equals 0, the corresponding memory element in memory device 350 is row 1, element 1. When POSITION equals 15, the corresponding memory element in memory device 350 is row 4, element 4. For memory device 350, as the first loop sequence cycles from one to LOC_INC (four in this example) and the second loop sequence cycles from one to ILIR (also four in this example), POSITION cycles through the values of 0, 4, 8, 12, 1, 5, 9, 13, 2, 6, 10, 14, 3, 7, 11 and 15, indicating which memory location to error-scrub during the respective first and second loop iteration. The respective correlating row:element for these POSITION values are 1:1, 2:1, 3:1, 4:1, 1:2, 2:2, 3:2, 4:2, 1:3, 2:3, 3:3, 4:3, 1:4, 2:4, 3:4 and 4:4. In one embodiment, method 200 further comprises converting the integer value from the POSITION function into a standard memory address format (260). When an error-scrub access is executed for that memory address, the entire row of memory is refreshed. One skilled in the art upon reading this specification would appreciate that the mapping of POSITION values to the address decoding structure of typical memory devices is device-architecture specific. Figure 3B represents one common case, but other device architectures are possible and within the scope of embodiments of the present invention.

In order to satisfy the refresh-scrub-access-period time interval, the time required for completing the second loop (230) sequences must be less than the row refresh interval for the memory device. Additionally, the time required for completing the first loop (210) sequences must be less than the element error-scrub interval. However, allowing method 200 to continuously cycle prevents applications from accessing memory device 350 for storing or retrieving data. Therefore, method 200 further comprises time delay (280) that allows applications to access memory device 350 for a time interval of T1 after each error scrub access. Time interval T1 is chosen to ensure that the entire refresh-scrub function of method (200) is performed within the time required by the refresh-scrub-access-period time interval. In one embodiment, time interval T1 is chosen as the largest time interval possible that still satisfies the refresh rate and error-scrub rate requirements. Pausing after each error scrub access distributes error scrub accesses more evenly throughout the refresh-scrub-access-period time interval thus reducing access latency for applications needing to access memory device 350.

As would be appreciated by one skilled in the art upon reading this specification, the sequential reading of data in memory elements is not limited to a sequence of consecutive memory device rows or columns, but can comprise any arbitrary sequence, as long as the refresh rate and error-scrub rate requirements are satisfied. In one embodiment, the algorithm of method 200 may be modified to take advantage of still other specific characteristics of the specific memory device used. For example, certain dynamic memory devices, such as but not limited to synchronous dynamic random access memory (SDRAM), are optimized for burst access to memory elements. In one embodiment, a memory device is optimized for burst access on the order of two to eight sequential addresses per burst. The total access overhead per address can be reduced by performing error-scrub accesses in bursts instead of one element location at a time. For example, in one embodiment, memory device 350 is optimized for burst access on the order of two addresses per burst. To take advantage of this two element burst access optimization, an alternate algorithm of one embodiment of the present invention cycles through POSITION values of 0, 1, 4, 5, 8, 9, 12, 13, 2, 3, 6, 7, 10, 11, 14, 15, as illustrated in Figure 3C. Depending upon the organization of the device, each burst may touch one or more rows, refreshing each row touched. If only one row is touched, excess error-scrub accesses are redundant for refreshing, but are beneficial for error-scrubbing.

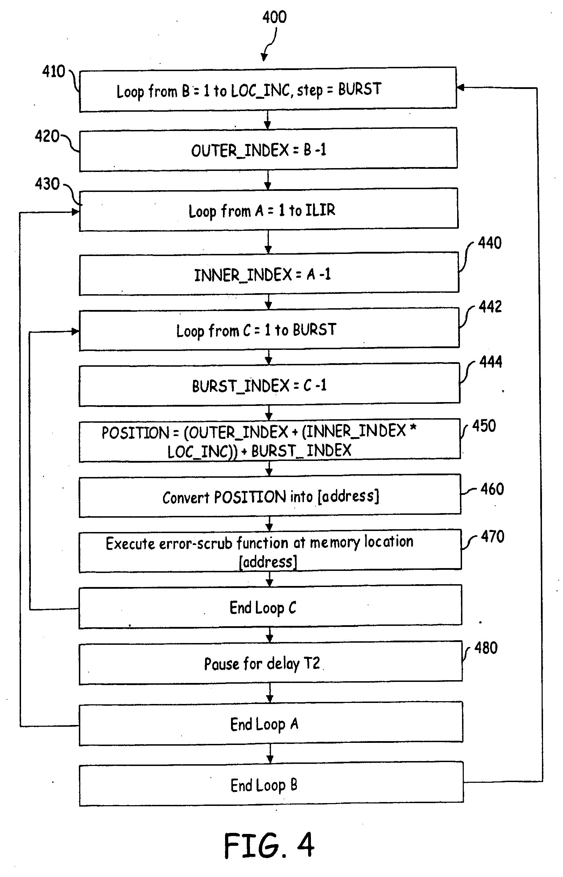

Figure 4 illustrates a method 400 of one embodiment for an algorithm such as method 200, which further takes advantage of burst access optimization. The algorithm of method 400 defines constants LOC_INC, LOC_RANGE and ILIR the same as for method 200 above and further defines the constant BURST which specifies the number of sequential address accesses memory device 350 is optimized to burst access. The algorithm of method 400 comprises a first loop sequence (410) which cycles from one to LOC_INC in increment steps equal to value of BURST. The variable OUTER_INDEX equals the current value of the first loop sequence minus one (420). Within the first loop sequence, a second loop sequence (430) cycles in one step increments from 1 to ILIR. INNER_INDEX equals the current value of the second loop sequence minus one (440). Within the second loop sequence, a third loop sequence (442) establishes the burst count of addresses for burst access, cycling from 1 to BURST. BURST_INDEX equals the current value of the third loop sequence minus one (444).

Within each third loop sequence, the algorithm cycles through memory device 350 (illustrated by 330-1 to 330-3) executing error-scrub accesses (470) to a total number of memory locations equal to BURST. In one embodiment, method 400 further defines POSITION (450) as equal to (OUTER_INDEX + (INNER_INDEX * LOC_INC)) + BURST_INDEX. The POSITION function calculates an integer value correlating the current OUTER_INDEX, INNER_INDEX and BURST_INDEX values to memory locations as described with respect to Figure 3B above. For the algorithm of method 400 applied to memory device 350, POSITION cycles through the values of 0, 1, 4, 5, 8, 9,12, 13, 2, 3, 6, 7, 10, 11, 14, 15, indicating the order of memory locations to error-scrub. In one embodiment, method 400 further comprises converting the integer value from the POSITION function into a standard memory address format (460).

Method 400 further comprises time delay (480) that allows applications to access memory device 350 for a time interval of T2 after each error scrub access burst. As with method 200, in order to satisfy the refresh-scrub-access-period time interval, the time required for completing the second loop (430) sequences must be less than the row refresh interval for memory device 350. Additionally, the time required for completing the first loop (410) sequences must be less than the element error-scrub interval. Therefore, time interval T2 is chosen to ensure that the entire refresh-scrub function of method (400) is performed within the time required by the refresh-scrub-access-period time interval. In one embodiment, time interval T2 is chosen as the largest time interval possible that still satisfies the refresh rate and error-scrub rate requirements. Pausing after each error scrub access burst distributes error scrub accesses more evenly throughout the refresh-scrub-access-period time interval thus reducing access latency for applications needing to access memory device 350.

Although Figures 2, 3A-C and 4 illustrate the application of methods with a hypothetical memory device comprising four rows of four elements, persons skilled in the art upon reading this specification would readily appreciate that embodiments of the present invention are not limited to this hypothetical device. To the contrary, embodiments of the present invention are applicable to any dynamic memory device possessing the characteristic where reading data from a memory location provides a refresh. For example, in one embodiment, memory device 350 is a double-data rate synchronous DRAM (DDR SDRAM) memory device having 8192 rows on 4 banks with a required refresh interval of 64 milliseconds.

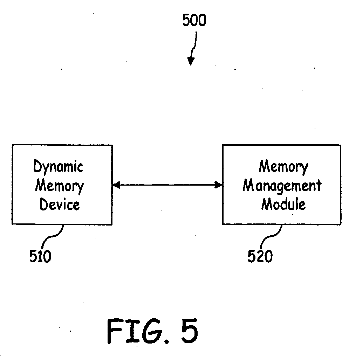

Figure 5 is a block diagram illustrating a system 500 for storing digital data, of one embodiment of the present invention. System 500 comprises one or more memory devices 510 and a memory management module 520 coupled to memory devices 510. Memory devices 510 comprise one or more memory devices such as, but not limited to, DRAM, SDRAM, DDR SDRAM, or similar memory devices which possesses a characteristic whereby reading from a memory location on the memory device performs a refresh on that memory location. In one embodiment, memory management module 520 executes a refresh-error-scrubbing function on memory devices 510 that combines error-scrub accesses with memory refreshes. In one embodiment, the refresh-error-scrubbing function executes algorithms such as those described with respect to Figures 1,2, 3A-C and 4. In one embodiment, error-scrub accesses comprise memory management module 520 reading the contents of a memory location to identify errors. By reading the data contained in a memory location, that memory location is refreshed. When an error is found, memory management module 520 retrieves the correct value and writes the correct value back into the memory location.

In one embodiment, memory management module 520 periodically performs error-scrub accesses to ensure that an error-scrub access is performed on every memory location within the time required by a refresh-scrub-access-period time interval. The refresh-scrub-access-period time interval is the time interval within which every memory location within memory devices 510 must be read to ensure that both the refresh rate requirements of memory devices 510, and the error scrub rate requirements for correcting upsets, are satisfied.

Several means are available to implement the methods and algorithms, and realize a memory management module such as those described above. These means include controllers such as, but not limited to, digital computer systems, programmable controllers, or field programmable gate arrays. Therefore other embodiments of the present invention are program instructions resident on computer readable media which when implemented by such controllers, enable the controllers to implement embodiments of the present invention. Computer readable media include any form of computer memory, including but not limited to punch cards, magnetic disk or tape, any optical data storage system, flash read only memory (ROM), non-volatile ROM, programmable ROM (PROM), erasable-programmable ROM (E-PROM), random access memory (RAM), or any other form of permanent, semi-permanent, or temporary memory storage system or device. Program instructions include, but are not limited to computer-executable instructions executed by computer system processors and hardware description languages such as Very High Speed Integrated Circuit (VHSIC) Hardware Description Language (VHDL).

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A method (100) for implementing a refresh-error-scrubbing function for a memory device (350, 510), the method comprising:
choosing the refresh-scrub-access-period time interval such that both a refresh rate requirement of the memory device (350, 510), and an error scrub rate requirement for correcting upsets, are satisfied (110).
sequentially reading data contained in a plurality of memory locations of a memory device (122);
checking for errors in data stored in the plurality of memory locations (123); and
correcting memory location data when an error is found (124);
wherein every memory location within the plurality of memory locations is repeatedly read with a periodicity not exceeding the refresh-scrub-access-period time interval.

2. The method of claim 1, wherein the memory device (350, 510) further comprises a plurality of rows (380) each having a plurality of elements (382), wherein each element (382) comprises a memory location of the memory device ((350, 510), sequentially reading data further comprising:
reading data contained in an n'th element (382) of each of the plurality of rows (380) within a time period less than a row refresh interval for the memory device (350, 510).

3. The method of claim 2, wherein sequentially reading data further comprises:
reading data contained in all elements (382) of each of the plurality of rows (380) within a time period less than an element error-scrub interval.

4. The method of claim 1, wherein the memory device ((350, 510) further comprises a plurality of rows (380) each having a plurality of elements (382), wherein each element (382) comprises a memory location of the memory device (350, 510), and wherein the memory device (350, 510) is optimized for burst access ofn elements, sequentially reading data further comprising:
reading data in burst of up to n elements (382) from each of the plurality of rows (380) within a time period less than a row refresh interval for the memory device (350, 510).

5. The method of claim 4, wherein sequentially reading data further comprises:
reading data contained in all elements (382) of each of the plurality of rows (380) within a time period less than an element error-scrub interval.

6. A method (100) for maintaining the integrity of data stored in dynamic memory devices, the method comprising:
determining a refresh-scrub-access-period time interval for a dynamic memory device (350, 510) having a plurality of memory elements, based on a refresh rate requirement for the dynamic memory device (350, 510) and an error scrub rate requirement; and
performing an error-scrubbing function on each memory element of the dynamic memory device (350, 510) at a periodicity not exceeding the iefresh-scrub-access-period time interval.

7. A system for storing data, the system comprising:
one or more dynamic memory devices (350, 510); and
a memory management module (520) coupled to the one or more memory devices (350, 510), wherein the memory management module (520) is adapted to periodically perform a refresh-scrub function on the one or more memory devices (350, 510) such that memory locations within the one or more memory devices (350, 510) are error-scrubbed within a time required by a refresh-scrub-access-period time interval.

8. The system of claim 7, wherein the memory management module (520) is further adapted to cycle through every memory location of the one or more memory devices (350, 510), read the contents of the each memory location, and identify errors.

9. A system for storing data, the system comprising:
means for storing data (350, 510), wherein the means for storing data (350, 510) stores data values in a plurality of memory elements;
means for reading the data values (520) stored in the plurality of memory elements;
means for identifying errors (520) in data values stored in the plurality of memory elements; and
means for correcting data values (520) when an error is found;
wherein the means for reading reads each of the plurality of memory elements with a periodicity not exceeding a refresh-scrub-access-period time interval.

10. The system of claim 9, wherein the refresh-scrub-access-period time interval is based on satisfying the requirements of a refresh rate for the means for storing data, and an error scrub rate requirement.
